# EUROPEAN PATENT APPLICATION

(11) **EP 4 530 002 A1**
(43) Date of publication of application: **02.04.2025**
(21) Application number: 23020454.7
(22) Date of filing: 29.09.2023
(51) Int. Cl.: B22F 10/28, B22F 10/32, B22F 10/36, B22F 12/17, B33Y 10/00, B33Y 50/02, C22C 1/04, C22C 9/00, B22F 12/41, B22F 12/70, B22F 12/90, B33Y 30/00

(54) **METHOD FOR GENERATING A THREE-DIMENSIONAL WORKPIECE**

(71) Applicant: Linde GmbH, 82049 Pullach (DE)
(72) Inventor: Dubiez-Le Goff, Sophie, 82049 Pullach (DE); Deckers, Tobias, 82049 Pullach (DE)
(74) Representative: Gellner, Bernd

(57) **Abstract**

The invention relates to a method for producing a three-dimensional workpiece from copper or from a copper alloy powder by a laser powder bed fusion process in a controlled atmosphere. The controlled atmosphere essentially consists of helium or hydrogen or a mixture of argon and helium or a mixture of argon and hydrogen or a mixture of argon and helium and hydrogen. The oxygen content of the controlled atmosphere is less than 200 vppm

## Description

The present invention relates to a method for producing a three-dimensional workpiece from copper or from a copper alloy powder by a laser powder bed fusion process, wherein the laser powder bed fusion process comprises melting a layer of the powder by means of a laser and wherein the powder bed fusion process is carried out in a controlled atmosphere in a process chamber.

Laser powder bed fusion is a well-known additive manufacturing technology. Laser powder bed fusion is a layer-by-layer build up process. A layer of powder is spread on a building platform and locally heated or melted by a laser. The building platform is then lowered by one layer thickness and a new layer of powder is spread over the building platform. Thereby, parts are built up additively layer by layer, typically using layers with a thickness of about 20 micrometers.

Copper alloys are widely used due to its thermal, electrical and mechanical properties. The high thermal and electrical conductivity of copper alloy makes it a material of choice for rocket engines and electrification components. Additive manufacturing and in particular laser powder bed fusion allows to design parts of high complexity and complex geometry which would not be possible with conventional casting or machining processes. For example, additive manufacturing allows to build heat exchangers with fine internal cooling channels.

But the additive manufacturing of copper or copper alloys is challenging due to the low absorptivity and high reflectivity of copper for the conventionally used laser infrared wavelength radiation. It is hard to bring sufficient laser energy into the material for melting the powder. Thus, the layer must not to be too thick. Typically, the layer thickness is limited to 20 micrometers maximum.

High power laser could be used to compensate for the low absorptivity. Thereby, more energy is brought into the part and into the powder but the part and the powder quality suffer from high laser energy inputs. High laser power causes discoloring of the powder and defects in the parts, such as a low density and bad surface roughness.

To mitigate some of the problems caused by high power lasers it has been proposed to pause for one or two minutes between two subsequent layers. However, this considerably reduces the productivity.

Copper and its alloys are also prone to oxidation leading to degrading and discoloring of the powder. Further, the powder particles agglomerate. Removal of non-fused powder from the parts is painful and the recyclability of the powder is impaired in quantity and time.

Thus, it is an object of the present invention to provide a method for additive manufacturing of copper alloys which avoids at least some of the above mentioned problems.

This object is achieved by a method for producing a three-dimensional workpiece from copper or a copper alloy powder by a laser powder bed fusion process, wherein the laser powder bed fusion process comprises melting a layer of the powder by means of a laser and wherein the powder bed fusion process is carried out in a controlled atmosphere in a process chamber. The controlled atmosphere essentially consists of
- helium or
- hydrogen or
- a mixture of argon and helium or
- a mixture of argon and hydrogen or
- a mixture of argon and helium and hydrogen.

The total content of helium and hydrogen in the controlled atmosphere is at least 20 vol-%, and the oxygen content of the controlled atmosphere is less than a maximum oxygen content of 200 vppm.

The terms "vol-%" and "vppm" shall mean percent by volume and parts per million by volume, respectively.

It has been found that the composition of the controlled atmosphere is a decisive factor for the quality of additively manufactured workpieces made of copper or copper alloys. The quality of the manufactured workpiece can be estimated based on the relative density of the workpiece and on the maximum size of defects in the workpiece. The relative density is defined as the ratio of the real density of the manufactured workpiece to the theoretical density of the copper or copper alloy. During the additive manufacturing process defects like pores, unmelted powder or impurities may occur in the workpiece. Such defects can negatively affect the mechanical and electrical properties of the workpiece. High quality workpieces are characterized by a high relative density of more than 98% or more than 99% and by a small maximum defect size of less than 300 micrometer, less than 250 micrometer, less than 200 micrometer or less than 150 micrometer.

For example, the density can be determined by measuring the volume and mass of the workpiece. Another way to determine the density is by image processing. An image of an cross-sectional area of the workpiece is taken. The image has gradations from black to white depending on the porosity of the workpiece. For example, pores are shown more black and dense material is shown white. By defining a threshold and comparing each image pixel with the threshold the total area of pores and the total area of dense material can be determined. Therefrom, the density of the workpiece can easily be calculated.

The maximum defect size can also be determined from the image of the workpiece cross-section. One or more Feret diameters of a defect area are measured and used to calculate the maximum defect size.

Tests have shown that helium and hydrogen in the controlled atmosphere help to increase the relative density of the workpiece and to decrease the maximum defect size. The positive effect on the workpiece density and on the maximum defect size can especially be seen when the total content of helium and hydrogen in the controlled atmosphere is at least 20 vol-%.

The inventors also recognized that helium and hydrogen have the benefit to decrease the creation of by-products such as spatters and fumes. As a consequence, the amount of defective parts is reduced and less energy is needed to melt the powder leading to less risks of distortion.

Further, the inventors found that the oxygen content of the controlled atmosphere has to be very low to reduce and / or prevent oxidation of the copper or copper alloy powder. The maximum content of oxygen in the controlled atmosphere should be 200 vppm. Thereby, oxidation is minimized and degradation, discolorization of the powder is avoided and a higher reusability of the powder achieved.

Preferably the maximum oxygen content in the controlled atmosphere is 100 vppm oxygen, 50 vppm oxygen, 25 vppm oxygen 20 vppm oxygen, 15 vppm oxygen, 10 vppm oxygen or 5 vppm oxygen. The oxygen content in the controlled atmosphere is maintained very low during the additive manufacturing process. For example, the oxygen content in the controlled atmosphere is kept between 2 and 20 vppm or between 2 and 5 vppm during the laser powder bed fusion process.

To ensure consistent residual oxygen levels in the controlled atmosphere the oxygen content of the controlled atmosphere is determined and if the determined oxygen content exceeds the maximum oxygen content, the concentration of argon and / or the concentration of helium and / or the concentration of hydrogen in the controlled atmosphere are adjusted so that the oxygen content is lowered to below the maximum oxygen content.

Such low oxygen concentrations are difficult to achieve in normal 3D printers. In many cases the gas analytic system of a common 3D printer is not able to measure and control the oxygen concentration in the process chamber to such low levels. Therefore, according to a preferred embodiment, a gas sample is withdrawn from the controlled atmosphere and the oxygen concentration of the gas sample is determined outside of the controlled atmosphere. The controlled atmosphere is then controlled depending on the determined oxygen concentration.

According to a preferred embodiment an oxygen trace analyzer specifically calibrated to the composition of the controlled atmosphere is implemented to analyze the gas sample. For example, the gas sample is analyzed for oxygen traces and other impurities. Depending on the result of the analysis the gas analyzer controls the oxygen level in the process chamber by purging the process chamber with argon, helium and / or hydrogen. In an embodiment of the invention the gas sample is recirculated into the controlled atmosphere.

The powder bed fusion process is carried out in a process chamber. The controlled atmosphere is provided in the process chamber. The process chamber may be provided with a recirculation system which allows to withdraw a gas sample from the process chamber, to pass the gas sample to an oxygen analyzer or oxygen sensor and to return the gas sample into the process chamber.

According to another embodiment a flow of gas is provided through the process chamber. The gas flow is set or controlled so that the oxygen concentration in the controlled atmosphere is less than 200 vppm, less than 100 vppm, less than 50 vppm, less than 20 vppm or less than 10 vppm.

With a total content of helium and hydrogen in the controlled atmosphere of at least 20 vol-% the workpiece density is increased and the maximum defect size is decreased. This effect on relative density and maximum defect size is all the greater the higher the helium and / or hydrogen content of the controlled atmosphere is. According to a preferred embodiment of the invention the helium content of the controlled atmosphere is at least 23 vol-%, at least 30 vol-%, at least 40 vol-% or at least 50 vol-%. Alternatively or additionally the hydrogen content of the controlled atmosphere is at least 23 vol-%, at least 30 vol-%, at least 40 vol-% or at least 50 vol-%.

Due to the low absorptivity and high reflectivity of copper alloys for the conventionally used laser infrared wavelength radiation it is hard to bring sufficient laser energy into the material for melting the powder. In a preferred embodiment of the invention the layer of powder is preheated to a temperature between 80 °C and 500 °C before the powder is melted by the laser. Such preheating could be done by heating the build plate on which the powder is spread and on which the workpiece is manufactured. By the proposed preheating less energy input from the laser is required and a lower maximum defect size and surface roughness of the workpiece is achieved. Preheating to a temperature of 200 °C, 300 °C, 400 °C or more normally causes a considerably increased oxidation of the powder. By limiting the maximum oxygen content in the controlled atmosphere according to the invention that oxidation is reduced or prevented and it becomes possible to preheat to temperatures of more than 400 °C.

It is in particular advantageous to keep the laser power at or below 1000 W, below 800 W, below 700 W, below 600 W or below 500 W.

In one embodiment the laser is an infrared laser. The wavelength of the infrared laser could be between 750 nm and 2000 nm. Preferred examples of such infrared lasers have a wavelength of 780 nm, 808 nm, 830 nm, 850 nm, 940 nm, 980 nm, 1070 nm, 1310 nm or 1550 nm.

According to another embodiment the laser is a blue laser with a wavelength between 400 nm and 500 nm. Blue lasers can be more precisely focused than infrared lasers. Examples include but are not limited to lasers with a wavelength of 405 nm or 445 nm or 450 nm or 460 nm or 473 nm.

According to another preferred embodiment the laser is a green laser with a wavelength between 500 nm and 550 nm. For example, the laser has a wavelength of 515 nm, 520 nm or 532 nm. Green lasers can also be focused very precisely. Further, in the wavelength range of green lasers the absorptivity of copper and copper alloys increases. Therefore, less laser power is needed.

By using a controlled atmosphere according to the present invention high quality workpieces with a high relative density and small maximum defect size can be manufactured. This allows to increase the thickness of the powder layer above the typically used 20 micrometer thickness in the state of the art. Preferably, the layer of the powder has a thickness of at least 30 micrometer, at least 40 micrometer, at least 60 micrometer or at least 80 micrometer. By increasing the layer thickness from 20 micrometer to 30 micrometer, 40 micrometer or even more the productivity of the laser powder bed fusion process is considerably increased.

The invention is especially useful in a laser powder bed process, that is in an additive manufacturing process where a laser is used as heat source for melting the copper alloy powder. Laser powder bed fusion (LPBF) is also known as selective laser melting (SLM) or as direct metal laser sintering (DMLS) The powder bed fusion process is carried out in a process chamber.

Preferably the additive manufacturing process is a Laser Powder Bed Fusion Process comprising the following steps:
- providing the copper powder or copper alloy powder on a built plate in a process chamber,
- melting the powder with a laser, and
- repeating the aforementioned steps
- wherein the controlled atmosphere within the process chamber is controlled so that the oxygen concentration is below 200 vppm
- and wherein the controlled atmosphere essentially consists of helium or hydrogen or a mixture of argon and helium or a mixture of argon and hydrogen or a mixture of argon and helium and hydrogen,
- and wherein the total content of helium and hydrogen is at least 20 vol-%.

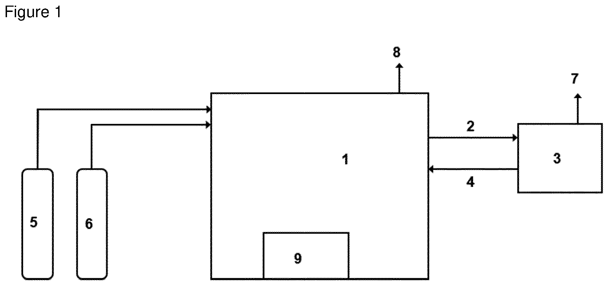

The above and other aspects, features, and advantages of certain embodiments of the invention will be more apparent from the following detailed description, when taken in conjunction with the accompanying drawing, in which
- Figure 1: schematically shows a process chamber for producing a workpiece by means of additive manufacturing

Figure 1 schematically shows a process chamber 1 for producing a workpiece by means of additive manufacturing, in particular by laser powder bed fusion. The manufactured workpiece is composed of metallurgical layers that are individually produced in succession. The individual metallurgical layers of the workpiece are produced by providing a layer of copper powder or copper alloy powder on a build plate 9 and selectively melting the powder with a 400 W laser. The building platform is then lowered by one layer thickness and a new layer of powder is spread over the build plate 9.

This takes place under a controlled gas atmosphere in the process chamber 1. The gas atmosphere in the process chamber 1 has been introduced into the process chamber 1 prior to the beginning of the additive manufacturing process. The gas atmosphere consists of argon and helium with an oxygen concentration of maximum 10 vppm. The helium content of the atmosphere is 30 vol-%. Argon and helium are supplied from gas cylinders 5 and 6, respectively.

A sample of the gas atmosphere is extracted from the process chamber 1 in the form of a gas stream 2 and fed to an analyzer 3. The analyzer 3 measures certain parameters, such as the oxygen content and other impurities, of the sample in order to determine if the gas atmosphere is still sufficiently inert and the oxygen concentration is below the 10 vppm threshold, respectively.

Preferably, the analyzer 3 is a unit that includes gas control, gas analytic systems and an electrical control system. The gas analytic system comprises at least one oxygen probe, preferably two different oxygen probes. Further, the analyzer 3 may include a dew point sensor to monitor the dew point of the sample withdrawn from the process chamber 1. Control valves and pressure sensors hold the pressure in the process chamber 1 on a stable level.

The oxygen content of the gas stream 2 is measured and compared with a nominal value in the analyzer 3. For the oxygen content the nominal value is the same as the above-mentioned threshold. Additional parameters such as, for example, the water vapor content of the gas stream 2, can be determined, too. If the measured parameters lie within the predefined range, e.g. if the water vapor content or the oxygen content are below the respective predefined nominal values, the gas stream 2 is completely returned via line 4 into the process chamber 1.

However, if the oxygen content is higher than the nominal value, the gas stream is partially or completely discarded through a vent 7. Instead, pure argon 5 or a mixture of argon 5 and helium 6 is introduced into the process chamber 1. An automatic gas supply replaces part of the atmosphere in the process chamber 1 by pure argon 5 or by an argon-helium mixture whereby ensuring that the oxygen concentration is reduced. The system controls the oxygen level by purging the process chamber 1 with argon or argon-helium if required. The pressure in the process chamber 1 is controlled with a pressure sensor and a vent valve 8. Preferably, the pressure in the process chamber 1 is kept constant.

The build plate 9 is preheated to a temperature of for example 180 °C. Thus, the powder will also be preheated and less laser energy is needed to melt the powder.

The system shown in figure 1 has been used to investigate the additive manufacturing characteristics of copper and copper alloys, in particular of CuCrZr, a copper alloy with additions of chromium and zirconium, and of GRCop-42, a copper / chromium / niobium alloy.

The following examples show laser powder bed fusion results for CuCrZr. Cube-shaped workpieces have been manufactured from CuCrZr powder by laser powder bed fusion. All tests have been carried out with a 400 W laser in a controlled atmosphere in a process chamber.

### Example 1:

The controlled atmosphere consisted of pure argon with about 1000 ppm oxygen. No preheating of the powder or of the build plate. The resulting workpieces had a density of 99.4% and a maximum defect size of 310 micrometer.

### Example 2:

The controlled atmosphere consisted of pure argon with about 1000 ppm oxygen. The build plate was preheated to 180°C. Thereby, the required energy input from the laser was reduced. The resulting workpieces showed an improved density of 99.6% and a lower maximum defect size of 212 micrometer.

However, in both examples 1 and 2 the CuCrZr powder was highly degraded after the additive manufacturing process. The powder agglomerated and showed a severe discoloration.

### Example 3:

The controlled atmosphere consisted of pure argon and the build plate 9 was preheated to 180°C. In addition, the oxygen content of the controlled atmosphere was controlled to be at or below 10 vppm. The resulting workpieces showed an identical density and a very similar maximum defect size as the workpieces of example 2. However, no powder agglomeration occurred and the powder showed only a slight discoloration.

### Example 4:

The controlled atmosphere consisted of a mixture of 70 vol-% argon with 30 vol-% helium. The build plate was preheated to 180°C. In addition, the oxygen content of the controlled atmosphere was controlled to be at or below 10 vppm. The resulting workpieces had an improved density of 99.8 % and a very low maximum defect size of 116 micrometer. Further, nearly no powder agglomeration and nearly no powder discoloration could be observed.

## Claims

1. Method for producing a three-dimensional workpiece from copper or from a copper alloy powder by a laser powder bed fusion process, wherein the laser powder bed fusion process comprises melting a layer of the powder by means of a laser and wherein the powder bed fusion process is carried out in a controlled atmosphere in a process chamber,
**characterized in that**
the controlled atmosphere essentially consists of
- helium or
- hydrogen or
- a mixture of argon and helium or
- a mixture of argon and hydrogen or
- a mixture of argon and helium and hydrogen,
and wherein the total content of helium and hydrogen is at least 20 vol-%, and wherein the oxygen content of the controlled atmosphere is less than a maximum oxygen content wherein the maximum oxygen content is 200 vppm.

2. Method according to claim 1, **characterized in that** the maximum oxygen content is 100 vppm oxygen, 50 vppm oxygen or 25 vppm oxygen or 10 vppm oxygen.

3. Method according to claim 1 or 2, **characterized in that** the oxygen content of the controlled atmosphere is determined and if the determined oxygen content exceeds the maximum oxygen content, the concentration of argon and / or the concentration of helium and / or the concentration of hydrogen in the controlled atmosphere is adjusted.

4. Method according to claim 3, **characterized in that** a sample is withdrawn from the controlled atmosphere, the oxygen content of the sample is determined and the controlled atmosphere is controlled depending on the determined oxygen content.

5. Method according to any of the preceding claims, **characterized in that** the helium content of the controlled atmosphere is at least 23 vol-%, at least 30 vol-% or at least 40 vol-% or at least 50 vol-%.

6. Method according to any of the preceding claims, **characterized in that** the hydrogen content of the controlled atmosphere is at least 30 vol-%, at least 40 vol-% or at least 50 vol-%.

7. Method according to any of the preceding claims, **characterized in that** the layer of the powder is preheated to a temperature between 80 °C and 500 °C before the powder is melted by the laser.

8. Method according to any of the preceding claims, **characterized in that** the laser has a power of less than 1000 W, less than 700 W, less than 600 W or less than 500 W.

9. Method according to any of the preceding claims, **characterized in that** the laser is a blue laser or a green laser or an infrared laser.

10. Method according to any of the preceding claims, **characterized in that** the layer of the powder has a thickness of at least 30 micrometer, at least 40 micrometer, at least 60 micrometer or at least 80 micrometer.

11. Method according to any of the preceding claims, **characterized in that** the copper alloy is CuCrZr or CuCrNb or a copper alloy with additions of chromium and / or zirconium and / or niobium.
